# EUROPEAN PATENT APPLICATION

(11) **EP 1 659 754 A1**
(43) Date of publication of application: **24.05.2006**
(21) Application number: 05025472.1
(22) Date of filing: 22.11.2005
(51) Int. Cl.: H04L 29/06

(54) **System and method for remotely controlling a debugging unit**

(30) Priority: 22.11.2004 KR 2004095934
(71) Applicant: LG Electronics Inc., Yongdungpo-gu Seoul (KR)
(72) Inventor: Shin, Sang-Cheol, Manan-Gu Anyang, Gyeonggi-Do (KR); Kim, Kyung-Hoon, Seodaemun-Gu Seoul (KR); Jung, Jong-Cheol, Seodaemun-Gu Seoul (KR); Jung, Young-Ho, Gangseo-Gu Seoul (KR)
(74) Representative: Katérle, Axel

(57) **Abstract**

Disclosed are a system and method for remotely controlling a debugging unit which can easily and accurately control the debugging unit in real time from a remote location regardless of the location of a mobile terminal without a data loss and without being restricted to one area. The system for remotely controlling a debugging unit comprises: a first protocol converter converting a first TCP (transmission control protocol) data, transmitted via the internet and containing a debugging command for controlling the debugging unit, into a first UDP (user datagram protocol) data; and a second protocol converter converting a second TCP data, transmitted from the first protocol converter via the internet and containing a debugging result data, into a second UDP data.

## Description

### BACKGROUND OF THE INVENTION

### 1. Field of the Invention

The present invention relates to a debugging unit for a mobile terminal, and more particularly, to a system and method for remotely controlling a debugging unit.

### 2. Description of the Prior Art

Recently, as the types of services for mobile terminals are varied, the size of a program code supporting a plurality of services is increased. Moreover, as the operation of a mobile terminal becomes gradually complicated, interaction between many operations of the mobile terminal does not operate smoothly, thus making the mobile terminal unstable.

A mobile terminal designer stabilizes the operation of a mobile terminal by debugging the operation of the mobile terminal by using a debugging unit. The debugging unit debugs the operational status of a mobile terminal (e.g., programs of the mobile terminal) by checking the program and data flow of the mobile terminal by use of the JTAG (joint test action group) Technologies.

The mobile terminal designer accesses the debugging unit by using a host (e.g., personal computer) and then transmits a debugging command to the debugging unit. The host and the debugging unit are interconnected through a UDP (user datagram protocol) of a LAN (local area network), and the host delivers a UDP data containing the debugging command to the debugging unit.

The debugging unit debugs the mobile terminal according to the debugging command within the UDP data, and then delivers the UDP data containing data representing a debugging result to the host. Here, there is the inconvenience that the mobile terminal designer has to be located in the same position or same area as the mobile terminal when debugging the mobile terminal on a local network because the host and the debugging unit utilize UDP. The characteristic of the UDP is that though it is fast in protocol processing, it has no functions such as error correction or retransmission unlike a TCP (transmission control protocol). Thus, the UDP is used in multimedia applications requiring a high speed rather than reliability.

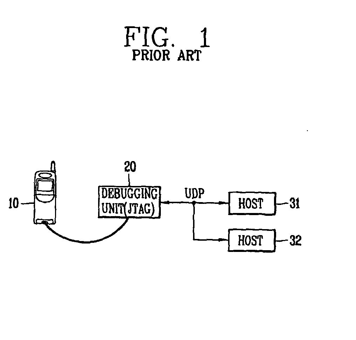

FIG.1 is an exemplary view showing the configuration of a debugging unit for debugging a mobile terminal and of a host (e.g., personal computer) for controlling the debugging unit in accordance with the prior art.

As shown in FIG.1, a mobile terminal 10 is physically connected to a debugging unit 20 via a dedicated debugging line.

The debugging unit 20 is connected to each host 31 and 32 through a UDP, receives a UDP data containing a debugging command from the host (e.g., host 31) through the UDP, and debugs the mobile terminal 10 by checking the program and data flow of the mobile terminal 10 by use of the JTAG Technologies according to the debugging command contained in the UDP data. Moreover, the debugging unit 20 transmits a UDP data containing a debugging result data to the host 31 after debugging the mobile terminal 10.

The host 31 is able to transmit the UDP data containing the debugging command to the debugging unit 20 through the UDP because it is connected to the debugging unit 20 through a LAN (local area network). Moreover, the host 31 receives the UDP data containing the debugging result data transmitted from the debugging unit 20, and displays the debugging result data within the received UDP data on a screen.

Meanwhile, the debugging unit 20 and each host 31 and 32 are connected by a LAN cable, and thus are located in the same area.

Each of the hosts 31 and 32 is placed in different positions on a local network, connected to one debugging unit 20, transmits a debugging command to the debugging unit 20 through the UDP, and displays the debugging result data transmitted from the debugging unit 20 on the screen. Accordingly, although each of the hosts 31 and 32 located on the local network can access the debugging unit 20 connected to the local network to thus control the debugging unit 20, they cannot remotely control the debugging unit connected to another local network since they cannot access the debugging unit connected to the another local network. For instance, there is a problem that a plurality of hosts and debugging u nits has to be located in the same area, and the debugging units have to be controlled only through a local network.

Besides, there is another problem that control information and data sent and received between the hosts and the debugging units are lost due to the characteristic of the UDP, thus generating an error when debugging a mobile terminal.

### SUMMARY OF THE INVENTION

Therefore, an object of the present invention is to provide a system and method for remotely controlling a debugging unit which can debug a mobile terminal in real time from a remote location regardless of the location of the mobile terminal without being restricted to one area by interconnecting the debugging unit and a host via the internet (TCP/IP protocol).

It is another object of the present invention to provide a system and method for remotely controlling a debugging unit which can reduce the loss of control information and data sent and received between the host and the debugging unit by interconnecting the debugging unit and a host via the internet (TCP/IP protocol).

To accomplish the above objects, there is provided a system for remotely controlling a debugging unit in accordance with the present invention, comprising: a first protocol converter converting a first TCP (transmission control protocol) data, transmitted via the internet and containing a debugging command for controlling the debugging unit, into a first UDP (user datagram protocol) data; and a second protocol converter converting a second TCP data, transmitted from the first protocol converter via the internet and containing a debugging result data, into a second UDP data.

To accomplish the above objects, there is provided another system for remotely controlling a debugging unit in accordance with the present invention, comprising: a first protocol converter being connected to the debugging unit for debugging a mobile terminal, converting a first TCP (transmission control protocol) data transmitted via the internet into a first UDP (user datagram protocol) data and converting the second UDP data transmitted from the debugging unit into a second TCP data; and a host being connected to the first protocol converter via the internet, converting the second TCP data transmitted from the first protocol converter into the second UDP data, generating the first UDP data and converting the generated first UDP data into the first TCP data.

To accomplish the above objects, there is provided a method for remotely controlling a debugging unit in accordance with the present invention, comprising the steps of: converting a first UDP (user datagram protocol) data, generated from a host and containing a debugging command for controlling the debugging unit, into a first TCP (transmission control protocol) data and transmitting the first TCP data to the debugging unit through a TCP/IP protocol; and converting the first TCP data transmitted to the debugging unit into the first UDP data and debugging a mobile terminal connected to the debugging unit according to the debugging command within the converted first UDP data.

To accomplish the above objects, there is provided a debugging unit in accordance with the present invention, comprising a protocol converter converting a first TCP (transmission control protocol) data, transmitted through a TCP/IP protocol and containing a debugging command for debugging a mobile terminal, into a first UDP (user datagram protocol) data.

To accomplish the above objects, there is provided a host in accordance with the present invention, comprising a protocol converter converting a first UDP (user datagram protocol) data, connected to a debugging unit for debugging a mobile terminal via the internet and containing a debugging command for controlling the mobile terminal, into a first TCP (transmission control protocol) data.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG.1 is an exemplary view showing the configuration of a debugging unit for debugging a mobile terminal and of a host for controlling the debugging unit in accordance with the prior art;
FIG.2 is a block diagram showing the configuration of a system for remotely controlling a debugging unit in accordance with an embodiment of the present invention;
FIG.3 is an exemplary view showing the protocol connection configuration of a mobile terminal, a debugging unit, the internet and a host of FIG.2; and
FIG.4 is an operational flow chart showing a method for remotely controlling a debugging unit in accordance with the embodiment of the present invention.

### DETAILED DESCRIPTION OF THE PREFERRED EMBODIMENTS

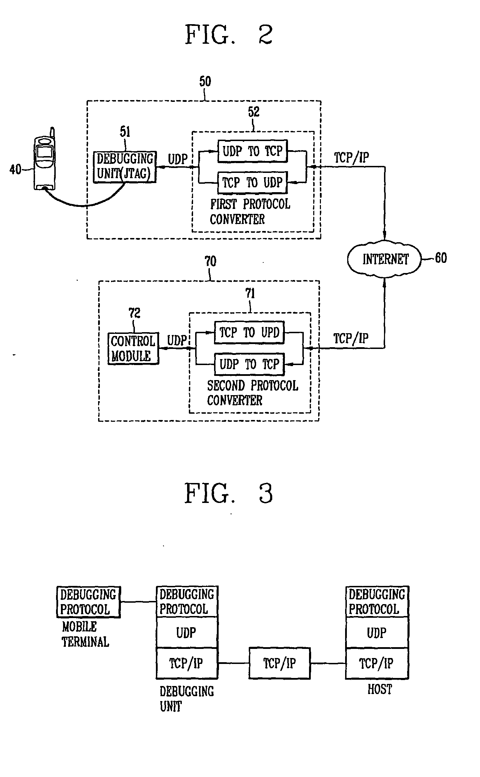

Hereinafter, a description will be made in detail with reference to FIGs.2 to 4 with respect to a preferred embodiment of a system and method for remotely controlling a debugging unit which can easily and accurately control the debugging unit 50 in real time from a remote location regardless of the location of a mobile terminal 40 without a data loss and without being restricted to one area by further configuring a protocol converter in a host and the debugging unit and interconnecting the host and the debugging unit via the internet (TCP/IP protocol).

FIG.2 is a block diagram showing the configuration of a system for remotely controlling a debugging unit in accordance with an embodiment of the present invention.

As shown in FIG.2, the system for remotely controlling a debugging unit in accordance with the present invention comprises: a first protocol converter 52 being connected to the debugging unit 50 physically connected to a mobile terminal 40 via a dedicated debugging line, converting a first TCP data transmitted via the internet (TCP/IP protocol) 60 into a first UDP data and converting a second UDP data transmitted from the debugging unit 50 into a second TCP data; and a host 70 being connected to the first protocol converter 52 via the internet (TCP/IP protocol) 60, converting the first UDP data containing a debugging command for controlling the debugging unit 50 into the second UDP data, converting the second TCP data into the second UDP data and remotely controlling the debugging unit 50 through the first protocol converter 52.

The mobile terminal 40 is physically connected to the debugging unit 50 via the dedicated debugging line, the debugging u nit 50 is connected to the internet 60 through the TCP/IP protocol, and the host 70 is connected to the internet 60 through the TCP/IP protocol 60.

The host 70 includes: a control module 72 generating the first UDP data containing the debugging command through the UDP and displaying a debugging result data contained in the second UDP data on the screen of the host 70; and a second protocol converter 71 converting the first UDP data containing the debugging command into the first TCP data and then transmitting the first TCP data to the first protocol converter 52 via the internet 60, or converting the second TCP data containing the debugging result data, transmitted from the first protocol converter 52 via the internet 60, into the second UDP data and then transmitting the converted second UDP data to the control module 72.

The debugging unit 50 includes: a debugging module 51 debugging the mobile terminal 40 by checking the program and data flow of the mobile terminal 40 by use of the JTAG (joint test action group) Technologies according to the debugging command contained in the first UDP data and generating the second UDP data containing the debugging result data after debugging the mobile terminal; and a first protocol converter 52 converting the second UDP data generated from the debugging module 51 into the second TCP data and then transmitting the converted second TCP data to the host 70 via the internet 60, or converting the first TCP data transmitted from the host 70 via the internet 60 into the first UDP data and then transmitting the converted first UDP data to the debugging module 51.

Hereinafter, the operation of the system for remotely controlling a debugging unit will be described in detail.

First, the mobile terminal 40 is physically connected to the debugging unit 50 via a dedicated debugging line.

The host 70 is connected to the debugging unit 50 via the internet 60, converts a first UDP data containing a debugging command into a first TCP data, and transmits the first TCP data to the debugging unit 50 via the internet 60. For example, the control module 72 within the host 70 generates a debugging command through a UDP according to a user's instruction, and transmits a first UDP data containing the generated debugging command to the second protocol converter 71.

The second protocol converter 71 within the host 70 converts the first UDP data transmitted from the control module 72 into a first TCP data, and transmits the first TCP data to the first protocol converter 52 of the debugging unit 50 via the internet 60.

The debugging unit 50 is connected to the host 70 via the internet 60, converts the first TCP data containing the debugging command into the first UDP data, and debugs the mobile terminal 40 according to the debugging command within the converted first UDP data. For example, the first protocol converter 52 receives the first TCP data containing the debugging command from the second protocol converter 71 of the host 70, which is a client, via the internet 60, and converts the received first TCP data into the first UDP data, and transmits the converted first UDP data to the debugging module 51.

The debugging module 51 debugs the mobile terminal 40 by checking the program and data flow of the mobile terminal 40 by use of the JTAG (joint test action group) Technologies according to the debugging command contained in the first UDP data.

Afterwards, the debugging module 51 generates a second UDP data containing data representing a debugging result after debugging the mobile terminal 40 according to the debugging command, and outputs the second UDP data to the first protocol converter 52.

The first protocol converter 52 converts the second UDP data transmitted from the debugging module 51 into a second TCP data, and transmits the converted second TCP data to the second protocol converter 71 of the host 71 via the internet 60. The internet 60 is a worldwide computer network, which prevents the phenomenon of information loss due to destruction of parts of the network by transmitting information in more than one direction or in another path by using a TCP/IP protocol.

Hereinafter, the second protocol converter 71 within the host 70 converts the second TCP data transmitted from the first protocol converter 52 into the second UDP data via the internet 60, and transmits the converted second UDP data to the control module 72.

The control module 72 receives the second UDP data transmitted from the second protocol converter 71, and displays the debugging result data contained in the second UDP data on the screen of the host 70.

Consequently, in the present invention, as the host 70 is connected to the debugging unit 50 through the TCP/IP protocol, the debugging unit 50 can be controlled from a remote location regardless of the location of the mobile terminal 40 without a data loss and without being restricted to one area, and the mobile terminal 40 connected to the debugging unit 50 can be accurately and easily debugged from a remote location.

FIG.3 is an exemplary view showing the protocol connection configuration of a mobile terminal, a debugging unit, the internet and a host of FIG.2.

A debugging protocol sends/receives a debugging command and a debugging result data from the mobile terminal 40, the debugging unit 50 and the host 70, a UDP protocol sends/receives a debugging command and a debugging result data from the debugging unit 50 and the host 70, and a TCP/IP protocol sends/receives a debugging command and a debugging result data from the debugging unit 50, the internet 60 and the host 70.

A debugging protocol layer within the host 70 transmits the debugging command of the host 70 to a UDP protocol layer. The UDP protocol layer transmits the debugging command of the debugging protocol to a TCP/IP protocol layer, and transmits the debugging result data of the debugging unit 50 to the debugging protocol layer. The TCP/IP protocol layer transmits the debugging command of the UDP protocol layer to the debugging unit 50 through the TCP/IP protocol layer of the internet, and transmits the debugging result data of the TCP/IP protocol layer to the UDP protocol layer.

The TCP/IP protocol layer within the debugging unit 50 sends/receives the debugging command of the host and the debugging result data of the debugging unit 50 by data communication with the TCP/IP protocol layer of the internet. The UDP protocol layer within the debugging unit 50 transmits the debugging command of the TCP/IP protocol layer to the debugging protocol layer, and transmits the debugging result data of the debugging protocol layer to the TCP/IP protocol layer. The debugging protocol layer transmits the debugging result data, obtained by transmitting the debugging command of the UDP protocol layer to the mobile terminal 40, to the UDP protocol layer.

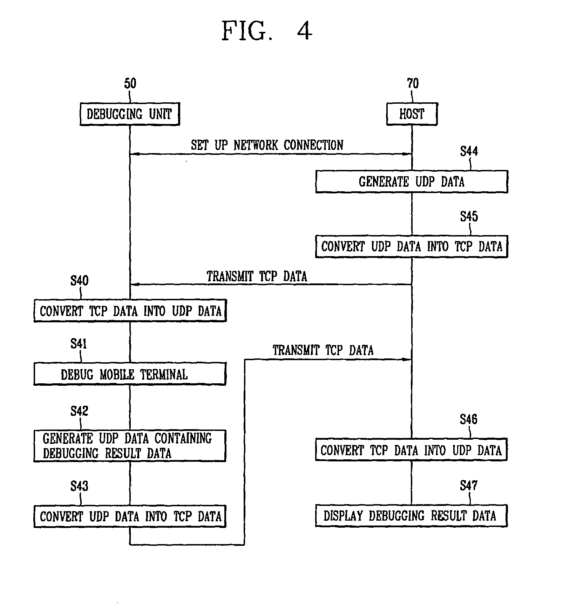

FIG.4 is a operational flow chart showing a method for remotely controlling a debugging unit in accordance with the embodiment of the present invention.

As shown in FIG.4, the method for remotely controlling a debugging unit in accordance with the embodiment comprises the steps of: setting up a network connection between a debugging unit 50 and a host 70 through a TCP/IP protocol by entering the IP of the debugging unit 50 through the host 70; generating a first UDP data containing a debugging command for controlling the operation of the debugging unit 50 through the host 70 (S44), converting the generated first UDP data into a first TCP data (S45) and transmitting the converted first TCP data to the debugging unit 50 via the internet 60; converting the transmitted first TCP data into the first UDP data (S40) and debugging a mobile terminal 40 according to a debugging command contained in the converted first UDP data through the debugging unit 50 (S41); generating a second UDP data containing a debugging result data after debugging the mobile terminal 40 according to the debugging command received through the debugging unit 50 (S42), converting the generated second UDP data into the second TCP data (S43) and transmitting the converted second TCP data to the host 70 via the internet; and converting the second TCP data received via the internet 60 to the second UDP data (S46) and displaying the debugging result data contained in the converted second UDP data on the screen of the host 70 (S47).

Hereinafter, the method for remotely controlling a debugging unit in accordance with the embodiment of the present invention will be described with reference to FIG.4.

Hereinafter, a description will be made under the assumption that the host 70 is located at a far distance from the mobile terminal 40 and the debugging unit 50, and the user debugs the mobile terminal 40 through the debugging unit 50 by using the host 70.

First, the host 70 sets up a network connection by entering the IP of the debugging unit 50 and attempting a TCP/IP connection with the debugging unit 50.

The host 70 generates a first UDP data containing a debugging command for controlling the operation of the debugging unit 50 in order to debug the mobile terminal 40 according to the user's debugging request (S44), and converts the generated first UDP data into a first TCP data (S45). The host 70 transmits the first TCP data to the debugging unit 50 via the internet 60.

The debugging unit 50 receives the first TCP data via the internet 60 and converts the first TCP data into the first UDP data (S40), debugs the mobile terminal 40 according to the debugging command contained in the first UDP data (S41), and then generates a second UDP data containing a debugging result data (S42).

The debugging unit 50 converts the second UDP data containing the debugging result data into a second TCP data (S43), and transmits the converted second TCP data to the host 70 via the internet 60. Here, the debugging result data is converted into the second UDP data, and then converted into the second TCP data.

The host 70 receives the second TCP data via the internet 60 and converts the received second TCP data into the second UDP data (S46), and receives the debugging result data within the second UDP data and displays the received debugging result data on the screen (S47).

As described above in detail, the system and method for controlling a debugging unit in accordance with the present invention have the effect of controlling the debugging unit 50 from a remote location regardless of the location of the mobile terminal 40 without a data loss and without being restricted to one area by connecting the host 70 to the debugging unit 50 through a TCP/IP protocol. Accordingly, the mobile terminal 40 connected to the debugging unit 50 can be easily and accurately debugged in real time from a remote location.

## Claims

1. A system for remotely controlling a debugging unit, comprising:
a first protocol converter converting a first TCP (transmission control protocol) data, transmitted via the internet and containing a debugging command for controlling the debugging unit, into a first UDP (user datagram protocol) data; and
a second protocol converter converting a second TCP data, transmitted from the first protocol converter via the internet and containing a debugging result data, into a second UDP data.

2. The system of claim 1, wherein the first protocol converter is installed on the debugging unit for debugging a mobile terminal.

3. The system of claim 2, wherein the debugging unit debugs the mobile terminal according to the debugging command contained in the first UDP data.

4. The system of claim 1, wherein the second protocol converter is installed on a host for remotely controlling the debugging unit through a TCP/IP protocol.

5. The system of claim 4, wherein the host displays the debugging result data contained in the second UDP data on the screen of the host.

6. A system for remotely controlling a debugging unit, comprising:
a first protocol converter being connected to the debugging unit for debugging a mobile terminal, converting a first TCP (transmission control protocol) data transmitted via the internet into a first UDP (user datagram protocol) data and
converting a second UDP data transmitted from the debugging unit into a second TCP data; and
a host being connected to the first protocol converter via the internet, converting the second TCP data transmitted from the first protocol converter into the second UDP data, generating the first UDP data and converting the generated first UDP data into the first TCP data.

7. The system of claim 6, wherein the host transmits the first TCP data containing a debugging command for controlling the debugging unit to the first protocol converter via the internet.

8. The system of claim 7, wherein the first protocol converter converts the first TCP data received from the host via the internet into the first UDP data, and transmits the converted first UDP data to the debugging unit.

9. The system of claim 8, wherein the debugging unit debugs the mobile terminal according to the debugging command within the first UDP data transmitted from the first protocol converter.

10. The system of claim 6, wherein the debugging unit transmits the second UDP data containing a debugging result data to the first protocol converter after debugging the mobile terminal.

11. The system of claim 10, wherein the first protocol converter converts the second UDP data containing the debugging result data into the second TCP data, and transmits the second TCP data to the host via the internet.

12. The system of claim 11, wherein the host converts the second TCP data transmitted from the first protocol converter via the internet into the second UDP data, and displays the debugging result data contained in the converted second UDP data on the screen of the host.

13. The system of claim 6, wherein the debugging unit includes a debugging module generating the second UDP data containing a debugging result data after debugging the mobile terminal by checking the program and data flow of the mobile terminal by use of the JTAG (joint test action group) Technologies according to a debugging command contained in the first UDP data transmitted from the first protocol converter,
wherein the first protocol converter converts the first TCP data containing the debugging command transmitted from the host into the first UDP data, and then converts the second UDP data containing the debugging result data into the second TCP data.

14. The system of claim 13, wherein the host includes:
a control module generating the first UDP data containing the debugging command according to a user's instruction; and
a second protocol converter converting the first UDP data containing the debugging command into the first TCP data, transmitting the converted first TCP data to the first protocol converter via the internet, converting the second TCP data, transmitted from the first protocol converter via the internet, into the second UDP data and transmitting the second UDP data to the control module,
wherein the control module displays the debugging result data contained in the second UDP data transmitted from the second protocol converter on the screen of the host.

15. A method for remotely controlling a debugging unit, comprising the steps of:
converting a first UDP (user datagram protocol) data, generated from a host and containing a debugging command for controlling the debugging unit, into a first TCP (transmission control protocol) data and transmitting the first TCP data to the debugging unit through a TCP/IP protocol; and
converting the first TCP data transmitted to the debugging unit into the first UDP data and debugging a mobile terminal connected to the debugging unit according to the debugging command within the converted first UDP data.

16. The method of claim 15, further comprising the steps of:
converting the second UDP data, generated after debugging the mobile terminal and containing a debugging result data, into a second TCP data and
transmitting the converted second TCP data to the host through the TCP/IP protocol; and
converting the second TCP data transmitted to the host into the second UDP data and displaying the debugging result data contained in the converted second UDP data on the screen of the host.

17. A debugging unit, comprising a protocol converter converting a first TCP (transmission control protocol) data, transmitted through a TCP/IP protocol and containing a debugging command for debugging a mobile terminal, into a first UDP (user datagram protocol) data.

18. The debugging unit of claim 17, wherein the protocol converter converts a second UDP data, generated from a debugging unit and containing a debugging result data, into a second TCP data.

19. A host, comprising a protocol converter converting a first UDP (user datagram protocol) data, connected to a debugging unit for debugging a mobile terminal via the internet and containing a debugging command for controlling the mobile terminal, into a first TCP (transmission control protocol) data.

20. The host of claim 19, wherein the protocol converter converts a second TCP data, generated from a debugging unit and containing a debugging result data, into a second UDP data.
